# EUROPÄISCHE PATENTSCHRIFT

(11) **EP 2 657 129 B1**
(45) Veröffentlichungstag und Bekanntmachung des Hinweises auf die Patenterteilung: **21.08.2019**
(21) Anmeldenummer: 13001969.8
(22) Anmeldetag: 15.04.2013
(51) Int. Cl.: B64C 25/24, F16H 25/22, F16H 25/24, F16H 25/20

(54) **AKTUATOR FÜR EIN FAHRWERK EINES LUFTFAHRZEUGES**
ACTUATOR FOR AIRCRAFT UNDERCARRIAGE
ACTUATEUR POUR TRAIN D'ATTERRISSAGE D'AÉRONEF

(30) Priorität: 27.04.2012 DE 102012009106
(43) Veröffentlichungstag der Anmeldung: 30.10.2013
(73) Patentinhaber: Liebherr-Aerospace Lindenberg GmbH, 88161 Lindenberg/Allgäu (DE)
(72) Erfinder: Bassett, Frederick, 88175 Scheidegg (DE)
(74) Vertreter: Herrmann, Uwe

(56) Entgegenhaltungen:
- EP-A1- 2 149 496
- EP-A1- 2 319 760
- US-A1- 2010 012 779
- US-A1- 2011 179 893

## Beschreibung

Die vorliegende Erfindung betrifft einen Aktuator für ein Fahrwerk eines Luftfahrzeuges, wobei der Aktuator mit dem Fahrwerk des Luftfahrzeuges derart verbunden ist, dass mittels des Aktuators das Fahrwerk des Luftfahrzeuges ein- und/oder ausfahrbar ist.

Aus dem Stand der Technik sind zahlreiche unterschiedliche Fahrwerkstypen von Luftfahrzeugen bekannt. Die Fahrwerke, wie beispielsweise das Bugfahrwerk, sowie das Hauptfahrwerk eines Verkehrsflugzeuges werden kurz nach dem Start eingefahren, kurz vor der Landung ausgefahren und sowohl in ihrer eingefahrenen und auch in ihrer ausgefahrenen Stellung arretiert, damit kein unerwünschter Bewegungsvorgang bzw. keine unerwünschte Verstellung des Fahrwerkes während des Fluges eintritt.

Bekannte Fahrwerke werden mit einem Ausfahr- bzw. Einfahraktuator versehen, mit Arretierungselementen, die das Fahrwerk in der eingefahrenen sowie auch in der ausgefahrenen Position halten, sowie auch mit Stützen, wie Bracing Struts, die bei aus dem Stand der Technik bekannten Fahrwerken alle als separate hydraulische Einheiten ausgebildet sind. Eine solche Anordnung ist zwar zuverlässig, jedoch vergleichsweise komplex aufgebaut und schwer, da mehrere der genannten hydraulischen Einheiten zur Betätigung der genannten Elemente verbaut werden müssen.

Die US 2010 / 012 779 A1 offenbart ein Fahrwerkssystem umfassend ein fahrwerk und einen Aktuator, der dazu ausgelegt ist, das Fahrwerk in der ausgefahrenen Position festzustellen.

Die EP 2 319 760 A1 zeigt ein Fahrwerk mit mehreren Arretierungsmechanismen, die dazu ausgelegt sind, das Fahrwerk in der eingefahrenen Position festzustellen. Die EP 2 149 496 A1 zeigt einen Aktuator mit einem Arretierungsmechanismus, der den Aktuator in einem ausgefahrenen Zustand festlegt.

Der vorliegenden Erfindung liegt somit die Aufgabe zugrunde, einen Aktuator der eingangs genannten Art dahingehend weiterzubilden, dass dieser über einen vergleichsweise einfachen Aufbau verfügt. Diese Aufgabe wird durch einen Aktuator mit den Merkmalen des Anspruchs 1 gelöst. Danach ist vorgesehen, dass der Aktuator zumindest eine Antriebseinheit aufweist, mittels derer wenigstens ein bewegbares Teil des Aktuators, das unmittelbar oder mittelbar mit dem eigentlichen Fahrwerk in Verbindung steht, in unterschiedliche Positionen bewegbar ist und dass die genannte Antriebseinheit durch wenigstens einen Elektromotor gebildet wird oder wenigstens einen Elektromotor umfasst.

Vorzugsweise ist vorgesehen, dass mehrere und besonders bevorzugt sämtliche Funktionalitäten des Aktuators, wie beispielsweise auch ein Verriegelungs- und Entriegelungsmechanismus elektrisch ausgeführt sind bzw. über elektrische Antriebseinheiten und nicht über eine Hydraulik verfügen. Vorzugsweise ist vorgesehen, dass der Aktuator über keine hydraulischen Antriebseinheiten verfügt.

Denkbar ist es, dass der Elektromotor unmittelbar oder mittelbar über wenigstens ein Getriebe mit einer Einheit in Verbindung steht, die eine Drehbewegung des Elektromotors oder des Getriebes in eine translatorische Bewegung des bewegbaren Teils des Aktuators umwandelt. So ist es beispielsweise denkbar, einen Elektromotor oder mehrere Elektromotoren zu verwenden, die unmittelbar oder mittelbar mit der genannten Einheit in Verbindung steht, die eine Drehbewegung in eine lineare Bewegung umwandelt. Denkbar ist es, dass ein Elektromotor über ein Getriebe, beispielsweise über ein zwei- oder mehrstufiges Getriebe eine Spindel eines Kugelspindeltriebes oder dergleichen antreibt, wobei der Kugelspindeltrieb derart ausgebildet und angeordnet ist, dass bei der Drehbewegung der Spindel eine translatorische Bewegung eines Teils des Aktuators stattfindet. Auf diese Weise kann der Aktuator und das mit diesem in Verbindung stehende Fahrwerk hin und her bzw. ein- und ausgefahren werden.

Die Bezugnahmen im Rahmen der Erfindung auf ein zweistufiges Getriebe umfassen ebenso ein beliebiges mehrstufiges Getriebe, sind also nicht auf ein zweistufiges Getriebe beschränkt.

Von der Erfindung ist auch eine getriebelose Ausführung mit umfassst.

Wie ausgeführt, ist vorzugsweise vorgesehen, dass die Einheit, die die Drehbewegung in eine translatorische Bewegung umwandelt, als Kugelgewindetrieb ausgebildet ist. Dabei kann die Spindel des Kugelgewindetriebes mit dem genannten Getriebe oder auch unmittelbar mit dem Elektromotor in Verbindung stehen oder verbindbar sein und die Mutter des Kugelgewindetriebes mit dem bewegbaren Teil des Aktuators, in Verbindung stehen. Mit diesem bewegbaren Teil steht dann seinerseits ein Bestandteil des Fahrwerks unmittelbar oder mittelbar in Verbindung, so dass die Bewegung des Aktuatorteils zu einer entsprechenden Einfahr- bzw. Ausfahrbewegung des Fahrwerkes führt.

Erfindungsgemäß ist vorgesehen, dass zwei Arretierungselemente vorgesehen sind, die das bewegbare Teil des Aktuators in beiden seiner Extrempositionen fixiert. Das bewegbare Teil des Aktuators durchläuft bei der Bewegung eine bestimmte Strecke und weist zu Beginn und zu Ende seines verfahrbaren Weges Extrempositionen auf, bei denen einerseits das Fahrwerk vollständig ausgefahren und andererseits vollständig eingefahren ist.

Des weiteren können Mittel vorgesehen sein, durch die die Arretierungselemente aktiv entriegelbar sind. Alternativ oder zusätzlich können die Arretierungselemente derart ausgeführt sein, dass sie bei Erreichen einer oder beider Extrempositionen des bewegbaren Teils des Aktuators selbsttätig ihre Verriegelungsposition einnehmen. So ist es beispielsweise denkbar, die Arretierungselemente federbelastet auszuführen, so dass sich diese selbst in ihre Arretierungs- bzw. Verriegelungsposition bewegen. In dieser Position ist eine Bewegung des Aktuators und damit auch des Fahrwerks ausgeschlossen. Aktuator und Fahrwerk sind somit in der eingefahrenen bzw. ausgefahrenen Position arretiert.

Das bewegbare Teil des Aktuators kann durch ein gehäuseartiges, vorzugsweise zylindrisches und/oder hohl ausgeführtes Teil gebildet werden oder ein Gehäuse umfassen, in dem eine oder mehrere Ausnehmungen angeordnet sind, in die die Arretierungselemente in der Verriegelungsposition eingreifen. So ist es beispielsweise denkbar, das oder die Arretierungselemente so auszuführen, dass sie federbelastet sind und zwar derart, dass sie auf das gehäuseartige Teil eine zu diesem hin gerichtete Druckkraft ausüben und selbsttätig in einer Ausnehmung dieses Teils oder eines sonstigen bewegbaren Aktuatorteils eingreifen, wenn diese Ausnehmung auf Höhe des Arretierungselementes liegt.

Soll eine Entriegelung erfolgen, kann dies aktiv beispielsweise durch Ansteuerung eines Elektromagneten oder dergleichen erfolgen. In diesem Fall wird das Arretierungselement derart bewegt bzw. zurückgezogen, dass eine Bewegung des Aktuators und damit auch des mit diesem in Verbindung stehenden Fahrwerks möglich ist.

In weiterer Ausgestaltung der Erfindung sind Mittel vorgesehen, durch die der Elektromotor bzw. das Getriebe von der genannten Einheit entkoppelbar ist, die eine Drehbewegung des Elektromotor oder des Getriebes in eine translatorische Bewegung des bewegbaren Teils des Aktuators umwandelt, wobei vorzugsweise vorgesehen ist, dass der Aktuator derart ausgebildet ist, dass er selbsttätig von einer ersten Position, in der das Fahrwerk eingefahren ist, in eine zweite Position bewegt wird, in der das Fahrwerk ausgefahren ist, wenn durch die genannten Mittel eine Entkoppelung stattfindet.

Findet somit eine Entkoppelung statt, kann das Fahrwerk bzw. der Aktuator ohne Eingreifen der Antriebseinheit in die ausgefahrene Fahrwerksposition bzw. die entsprechende Position des Aktuators "fallen". Im Endpunkt dieser Bewegung bzw. wenn das Fahrwerk seine gewünschte Endposition erreicht hat, ist es denkbar, dass die oben genannten Arretierungselemente selbsttätig eine Arretierung des Aktuators und somit auch des Fahrwerks vornehmen.

In weiterer Ausgestaltung der Erfindung ist vorgesehen, dass wenigstens eine Bremse vorgesehen ist, die derart ausgeführt ist, dass sie bei der genannten selbsttätigen Bewegung des Aktuators von der ersten in die zweite Position auf das bewegbare Teil des Aktuators, wie beispielsweise auf die Spindel eines Kugelspindeltriebes, eine Bremswirkung ausübt. Wird die Antriebseinheit von dem Kugelgewindetrieb oder auch von einer sonstigen Einheit, die eine Drehbewegung in eine translatorische Bewegung umwandelt, entkoppelt, wird der Aktuator nicht durch die Antriebseinheit, sondern durch das ausfahrende Fahrwerk bedingt durch die Schwerkraft betätigt. Um die dabei auftretende Rotationsbewegung der Spindel des Kugelspindeltriebes oder einer sonstigen Einheit zu limitieren, kann die genannte Bremse vorgesehen sein. Dabei ist vorzugsweise vorgesehen, dass die Bremse mit der Spindel des Kugelgewindetriebs oder einer sonstigen Einheit permanent in Verbindung steht oder ab oder mit zunehmender Drehgeschwindigkeit der Spindel in Eingriff steht und damit eine Bremswirkung entfaltet. Vorzugsweise ist diese Bremse derart ausgestaltet, dass deren Bremskraft mit zunehmender Rotationsgeschwindigkeit der Spindel des Kugelgewindetriebes oder einer sonstigen vergleichbaren Einheit zunimmt.

Die vorliegende Erfindung betrifft des weiteren ein Fahrwerk für ein Luftfahrzeug, wobei das Fahrwerk mit wenigstens einem Aktuator derart in Verbindung steht, dass es bei Betätigung des Aktuators ein- und/oder ausfährt, wobei vorzugsweise vorgesehen ist, dass es sich bei dem Aktuator um einen Aktuator gemäß einem der Ansprüche 1 bis 8 handelt.

Die vorliegende Erfindung betrifft des weiteren ein Luftfahrzeug, wie beispielsweise ein Flugzeug, einen Hubschrauber oder dergleichen mit wenigstens einem Fahrwerk, wobei es sich bei dem Fahrwerk um das vorgenannte erfindungsgemäße Fahrwerk handelt.

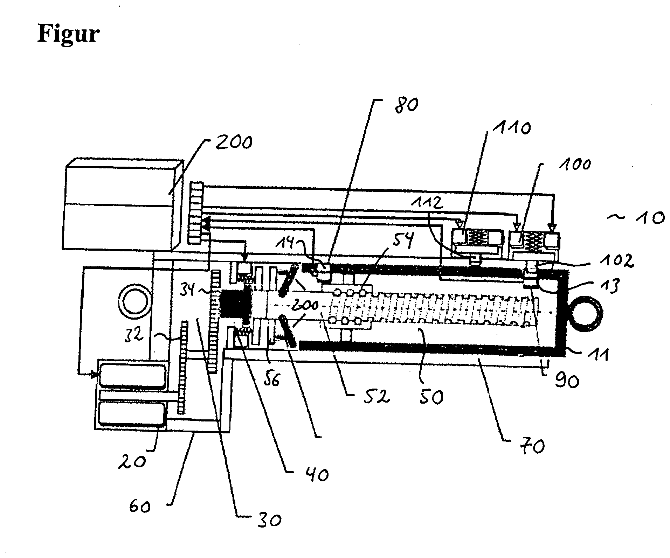

Weitere Einzelheiten und Vorteile der Erfindung werden anhand eines in der Zeichnung dargestellten Ausführungsbeispiels näher erläutert. Die einzige Figur zeigt eine schematische Ansicht eines erfindungsgemäßen Flugwerksaktuators, der als elektromechanische Einheit ausgebildet ist.

Der in der Figur mit dem Bezugszeichen 10 gekennzeichnete Aktuator kann auf Anweisung durch den Luftfahrzeugführer beispielsweise ein Bugfahrwerk oder ein Hauptfahrwerk oder ein sonstiges Fahrgestell eines Luftfahrzeuges einfahren und ausfahren, wobei vorzugsweise vorgesehen ist, dass das Fahrwerk in eine entsprechende Ausnehmung im Rumpf bzw. in der Tragfläche des Luftfahrzeuges eingefahren wird. Dabei ist erfindungsgemäß vorgesehen, dass der Aktuator ausschließlich elektrische Mittel aufweist, um diese Einfahr- bzw. Ausfahrbewegung zu bewerkstelligen.

Dazu ist der mit dem Bezugszeichen 20 gekennzeichnete Elektromotor vorgesehen, der das zweistufige Getriebe 30 antreibt.

Das Getriebe besteht aus zwei Zahnrädern 32, 34, von denen das abtriebseitige Zahnrad 34 mit einem aktiven Verbindungsmittel (active connecting device) in Verbindung steht. Dieses Verbindungsmittel 40 ist derart ausgeführt, dass es in einer ersten Position eine Drehbewegung des Zahnrades 34 in eine Drehbewegung der Spindel 52 des Kugelgewindetriebes 50 überträgt.

In einer zweiten Position ist diese Verbindung unterbrochen, das heißt das Verbindungsmittel 40 stellt die genannte Drehverbindung zwischen dem Getriebe 30 und der Spindel 52 des Kugelgewindetriebes 50 nicht mehr her. In diesem Fall ist somit die Spindel 52 frei relativ zu dem Getriebe 30 bzw. zu dem Elektromotor 20 drehbar.

Wie dies weiter aus der Figur hervorgeht, weist der Aktuator 10 ein oberes oder äußeres Gehäuse 60 und ein unteres bzw. inneres Gehäuse 70 auf. In den letzteren ist der bewegbare Teil 11 des Aktuators 10 translatorisch bewegbar aufgenommen, der mit einem nicht dargestellten Fahrwerk in Verbindung steht.

Wie dies aus der Figur hervorgeht, steht der Kugelgewindetrieb 50 derart mit dem bewegbaren Teil 11 des Aktuators 10 in Verbindung, dass durch die translatorische Bewegung der Mutter 54 auch eine translatorische Bewegung des bewegbaren Teils 11 des Aktuators 10 erfolgt. Somit ist es möglich, eine Drehung der Spindel 52 in eine translatorische Bewegung des bewegbaren Teils 11 des Aktuators 10 zu übertragen. Wie dies weiter aus der Figur hervorgeht, ist ein Sensor 80 und ein Sensor 90 vorgesehen, die jeweils am bewegbaren Teil 11 des Aktuators 10 angeordnet sind und zwar im Bereich von darin angeordneten Ausnehmungen. Dabei detektiert der Sensor 80 (down and locked sensor (DLS)) den ausgefahrenen Zustand des Aktuators bzw. des Fahrwerks und der andere Sensor 90 (up and locked sensor (ULS)) den eingefahrenen Zustand des Aktuators bzw. des Fahrwerks.

Das bewegbare Teil 11 des Aktuators 10 kann beispielsweise als Hohlkörper ausgeführt sein, dessen eines Ende offen und dessen anderes Ende, mit dem das Fahrwerk in Verbindung steht, geschlossen ausgeführt sein kann. In diesem gehäuseartigen Teil 11, das das bewegbare Teil des Aktuators dargestellt, befindet sich der Kugelgewindetrieb 50. Dessen Mutter 54 steht mit der Innenseite dieses gehäuseartigen Teils 11 in Verbindung.

Wie dies aus der Figur weiter hervorgeht, sind Arretierungselemente 100, 110 vorgesehen, die wie auch die Sensoren 80, 90 in Bewegungsrichtung des bewegbaren Aktuatorteils 11 versetzt angeordnet sind. Die beiden Arretierungselemente 100, 110 haben die Aufgabe, das bewegbare Teil 11 des Aktuators 10 einerseits in der eingefahrenen Position und andererseits in der ausgefahrenen Position des Fahrwerks zu arretieren. Wird der bewegbare Teil 11 des Aktuators 10 arretiert, ist damit auch das mit diesem in Verbindung stehende Fahrwerk arretiert.

Die Mechanismen 100, 110 bzw. die Arretierungselemente 100, 110 weisen jeweils einen federbelasteten Vorsprung 102, 112 auf, der je nach Position des Teils 11 in die genannten Ausnehmungen 13, 14 des Gehäuses 11, das heißt des bewegbaren Teils des Aktuators 10 eingreift, wenn sich der Aktuator bzw. dessen bewegbares Teil 11 in seinen Extrempositionen (ganz eingefahren und ganz ausgefahren) befindet. In dem in der Figur dargestellten Beispiel befindet sich der Aktuator bzw. das Fahrwerk im eingefahrenen Zustand und wird dort durch den Mechanismus bzw. das Arretierungselement 100 (up lock mechanism (ULM)) fixiert, dessen Vorsprung 102 in die Ausnehmung 13 eingreift.

Wird der Aktuator ausgefahren, das heißt wird das bewegbare Teil 11 gemäß Figur nach rechts verschoben und zwar durch den Kugelgewindetrieb 50, gelangt bei Erreichen einer bestimmten Position der Vorsprung 112 des Arretierungselementes 110 (down lock mechanism (DLM)) in die Ausnehmung 14 des bewegbaren Aktuatorteils 11 und arretiert den Aktuator und damit auch das Fahrwerk in der ausgefahrenen Position.

Mit dem Bezugszeichen 200 ist eine Elektronikeinheit bzw. eine Steuerungs- oder Regelungseinheit vorgesehen, die den Motor 20 sowie auch die Arretierungselemente 100, 110 ansteuert. Eine solche Ansteuerung ist erforderlich, wenn das Teil 11 des Aktuators von der arretierten Position gelöst werden soll, damit eine Bewegung dieses Aktuatorteils und damit auch des Fahrwerks möglich ist. Wie dies aus der Figur hervorgeht, werden auch diese Arretierungselemente 100, 110 sowie auch der Elektromotor 20 von der Elektronikeinheit 200 angesteuert.

Insgesamt ist vorzugsweise vorgesehen, dass der gesamte Aktuator über keine hydraulischen Antriebsmittel, sondern nur über elektrische/elektronische Antriebsmittel verfügt.

Die Elektronikeinheit 200 steuert darüber hinaus das Kopplung- bzw. Verbindungsmittel 40 an, das dazu in der Lage ist, die Verbindung zwischen Getriebe 30 und der Spindel 52 des Kugelgewindetriebes 50 wahlweise herzustellen oder auch zu unterbrechen. Auch diese Verbindungsmittel 40 werden von der Elektronik 200 angesteuert. Wie dies weiter aus der Figur hervorgeht, erhält die Elektronik 200 von den genannten Sensoren 80, 90 Rückmeldungen und zwar dahingehend, ob (bzw. in welcher) sich der genannte Aktuator bzw. das Gehäuse 70 in einer seiner extremen Positionen befindet oder nicht.

Soll der Aktuator ausgehend von einer arretierten Position bewegt werden, veranlasst die Steuerung 200 das Lösen des Arretierungsmechanismus 100 bzw. 110, so dass eine lineare Bewegung des Aktuatorteils 11 möglich ist. Erreicht dieses Teil 11 im Rahmen der Bewegung die andere Extremposition, das heißt wird der Aktuator ein- oder ausgefahren, ist diese Bewegung so lange möglich, bis das andere Arretierungselement 100 bzw. 110 in die zugehörige Ausnehmung 13, 14 des Aktuators eingreift und damit eine weitere Bewegung des Aktuators und damit auch des Fahrwerks unterbindet. Diese Arretierungselemente 100, 110 fallen selbständig, beispielsweise bedingt durch die Kraft einer Feder in ihre Arretierungsposition, halten den Aktuator bzw. das Teil 11 in der Extremposition, das heißt entweder im eingefahrenen oder im ausgefahrenen Zustand und übertragen in diesem Zustand auch Lasten.

Auf Anforderung kann veranlasst durch die Elektronik 200 der dargestellte Linearantrieb des Aktuators vom Antrieb 20, 30 diskonnektiert werden und zwar durch Aktivierung der Verbindungsmittel 40 durch die Elektronik 200 und fällt dann ausgehend von der eingefahrenen Extremposition ungesteuert, das heißt jedenfalls nicht in Verbindung mit der Antriebseinheit in die ausgefahrene Extremposition, im freien Fall. Wie dies ausgeführt wurde, erfolgt diese Bewegung so lange, bis der Aktuator automatisch durch den Down Lock Mechanismus, das heißt das Arretierungselement 110 blockiert wird und die auftretenden Kräfte übernimmt.

Diese Diskonnektion des Linearantriebes von der Antriebseinheit bzw. vom Getriebe ist möglich, in dem das mechanische Verbindungselement 40, das einen Bestandteil des Aktuators 10 bildet in seine Freigabestellung geschaltet wird, worauf hin der lineare und der Drehantrieb des Aktuators voneinander getrennt werden. Der genannte "freie Fall", das heißt das nicht durch eine Antriebseinheit bedingte Bewegen des Aktuatorteils 11 in die ausgefahrene Position wird durch Bremsen oder durch eine Bremse verlangsamt, sobald die Drehgeschwindigkeit der Spindel 52 einen bestimmten Wert eingenommen hat. Mit zunehmender Drehgeschwindigkeit erfolgt eine zunehmende Bremswirkung. Diese wird dadurch erreicht, dass an einem Flansch 56 der Spindel 52 bewegbare Bremselemente 200 vorgesehen sind, die mit zunehmender Drehgeschwindigkeit nach außen bewegt werden und damit mit dem feststehenden Gehäuseteil 70 derart in Eingriff gelangen, dass durch dieses eine Bremskraftwirkung erreicht wird. Aufgrund der Zentrifugalkraft, die auf diese Bremselemente 200 wirkt, tritt mit zunehmender Drehgeschwindigkeit der Spindel 52 eine zunehmende Bremskraft ein.

## Patentansprüche

1. Aktuator (10) für ein Fahrwerk eines Luftfahrzeuges, wobei der Aktuator (10) mit dem Fahrwerk des Luftfahrzeuges derart verbindbar ist, dass mittels des Aktuators (10) das Fahrwerk des Luftfahrzeuges ein- und/oder ausfahrbar ist, wobei der Aktuator (10) zumindest eine Antriebseinheit aufweist, mittels derer wenigstens ein bewegbares Teil (11) des Aktuators (10) in unterschiedliche Positionen bewegbar ist und dass die genannte Antriebseinheit durch wenigstens einen Elektromotor (20) gebildet wird oder wenigstens einen Elektromotor (20) umfasst,
**dadurch gekennzeichnet,**
**dass** zwei Arretierungselemente (100, 110) vorgesehen sind, die das bewegbare Teil (11) des Aktuators (10) derart in beiden seiner Extrempositionen fixieren, dass damit auch das mit dem bewegbaren Teil (11) des Aktuators (10) verbindbare Fahrwerk arretiert wird.

2. Aktuator nach Anspruch 1, **dadurch gekennzeichnet, dass** der Elektromotor (20) unmittelbar oder mittelbar über wenigstens ein Getriebe (30) mit einer Einheit in Verbindung steht, die eine Drehbewegung des Elektromotors (20) oder des Getriebes (30) in eine translatorische Bewegung des bewegbaren Teils (11) des Aktuators (10) umwandelt.

3. Aktuator nach Anspruch 2, **dadurch gekennzeichnet, dass** die genannte Einheit durch einen Kugelgewindetriebe (50) gebildet wird, wobei vorzugsweise vorgesehen ist, dass die Spindel (52) des Kugelgewindetriebes (50) mit dem Getriebe (30) in Verbindung steht oder verbindbar ist und dass die Mutter (54) des Kugelgewindetriebes (50) mit dem bewegbaren Teil (11) des Aktuators (10) in Verbindung steht oder verbindbar ist.

4. Aktuator nach einem der vorhergehenden Ansprüche, **dadurch gekennzeichnet, dass** Mittel vorgesehen sind, durch die die Arretierungselemente (100, 110) aktiv entriegelbar sind und/oder dass die Arretierungselemente (100, 110) derart ausgeführt sind, dass sie bei Erreichen einer oder beider Extrempositionen des bewegbaren Teils (11) des Aktuators (10) selbsttätig ihre Verriegelungsposition einnehmen.

5. Aktuator nach einem der vorhergehenden Ansprüche, **dadurch gekennzeichnet, dass** das bewegbare Teil (11) des Aktuators (10) durch ein gehäuseartiges Teil gebildet wird oder ein solches Teil umfasst, in dem eine oder mehrere Ausnehmungen (13, 14) angeordnet sind, in die die Arretierungselemente (100, 110) in der Verriegelungsposition eingreifen.

6. Aktuator nach einem der vorhergehenden Ansprüche, **dadurch gekennzeichnet, dass** Mittel vorgesehen sind, durch die der Elektromotor (20) bzw. das Getriebe (30) von der genannten Einheit entkoppelbar ist, die eine Drehbewegung des Elektromotors (20) oder des Getriebes (30) in eine translatorische Bewegung des bewegbaren Teils (11) des Aktuators (10) umwandelt, wobei vorzugsweise vorgesehen ist, dass der Aktuator (10) derart ausgebildet ist, dass er selbsttätig von einer ersten Position, in der das Fahrwerk eingefahren ist, in eine zweite Position bewegt wird, in der das Fahrwerk ausgefahren ist, wenn durch die genannten Mittel eine Entkoppelung stattfindet.

7. Aktuator nach einem der vorhergehenden Ansprüche, **dadurch gekennzeichnet, dass** wenigstens eine Bremse vorgesehen ist, die derart ausgeführt ist, dass sie bei der genannten selbsttätigen Bewegung des Aktuators (10) von der ersten in die zweite Position auf das bewegbare Teil (11) des Aktuators (10) eine Bremswirkung ausübt, wobei vorzugsweise vorgesehen ist, dass die Bremse mit der Spindel (52) des Kugelgewindetriebes (50) permanent in Verbindung steht und ab oder mit zunehmender Drehgeschwindigkeit der Spindel (52) in Eingriff steht und damit eine Bremswirkung entfaltet.

8. Vorrichtung umfassend ein Fahrwerk für ein Luftfahrzeug und einen Aktuator (10), wobei das Fahrwerk mit dem Aktuator (10) derart in Verbindung steht, dass es bei Betätigung des Aktuators (10) ein- und/oder ausfahrbar ist, **dadurch gekennzeichnet, dass** es sich bei dem Aktuator (10) um einen Aktuator (10) gemäß einem der Ansprüche 1 bis 7 handelt.

9. Luftfahrzeug mit wenigstens einer Vorrichtung, **dadurch gekennzeichnet, dass** es sich bei der Vorrichtung um eine Vorrichtung gemäß Anspruch 8 handelt.

## Claims

1. An actuator (10) for a landing gear of an aircraft, wherein the actuator (10) can be connected to the landing gear of the aircraft in such a way that the landing gear of the aircraft is retractable and/or extendable by means of the actuator (10), wherein the actuator (10) has at least one drive unit by means of which at least one movable part (11) of the actuator (10) can be moved into different positions and that said drive unit is formed by at least one electric motor (20) or comprises at least one electric motor (20),
**characterised in that**
two locking members (100, 110) are provided, which fix the movable part (11) of the actuator (10) in both of its extreme positions in such a way that the landing gear that can be connected to the movable part (11) of the actuator (10) is also locked thereby.

2. The actuator according to claim 1, **characterised in that** the electric motor (20) is directly or indirectly connected via at least one gearbox (30) to a unit that converts a rotational movement of the electric motor (20) or of the gearbox (30) to a translational movement of the movable part (11) of the actuator (10).

3. The actuator according to claim 2, **characterised in that** said unit is formed by a ball screw (50), wherein it is preferably provided that the spindle (52) of the ball screw (50) is connected or can be connected to the gearbox (30) and **in that** the nut (54) of the ball screw (50) is connected or can be connected to the movable part (11) of the actuator (10).

4. The actuator according to one of the preceding claims, **characterised in that** means are provided by which the locking members (100, 110) can be actively unlocked and/or **in that** the locking members (100, 110) are designed in such a way that they automatically assume their interlock position on reaching one or both of the extreme positions of the movable part (11) of the actuator (10).

5. The actuator according to one of the preceding claims, **characterised in that** the movable part (11) of the actuator (10) is formed by a housing-like part, or comprises such a part, in which one or more recesses (13, 14) are arranged in which the locking members (100, 110) engage in the interlock position.

6. The actuator according to one of the preceding claims, **characterised in that** means are provided by which the electric motor (20) or the gearbox (30) can be decoupled from said unit that converts a rotational movement of the electric motor (20) or of the gearbox (30) to a translational movement of the movable part (11) of the actuator (10), wherein it is preferably provided that the actuator (10) is designed in such a way that it is automatically moved from a first position in which the landing gear is retracted to a second position in which the landing gear is extended when a decoupling takes place by said means.

7. The actuator according to one of the preceding claims, **characterised in that** at least one brake is provided, which is designed in such a way that it exerts a braking effect on the movable part (11) of the actuator (10) during said automatic movement of the actuator (10) from the first to the second position, wherein it is preferably provided that the brake is permanently connected to the spindle (52) of the ball screw (50) and engages therewith from or with increasing rotational speed of the spindle (52) and thus develops a braking effect.

8. An apparatus comprising a landing gear for an aircraft and an actuator (10), wherein the landing gear is connected to the actuator (10) in such a way that it is retractable and/or extendable when the actuator (10) is actuated, **characterised in that** the actuator (10) is an actuator (10) according to one of claims 1 to 7.

9. An aircraft having at least one apparatus, **characterised in that** the apparatus is an apparatus according to claim 8.

## Revendications

1. Actionneur (10) pour un train de roulement d'un aéronef, dans lequel l'actionneur (10) peut être relié au train de roulement de l'aéronef de telle manière que le train de roulement de l'aéronef peut être rentré et/ou sorti au moyen de l'actionneur (10), dans lequel l'actionneur (10) présente au moins une unité d'entraînement, au moyen de laquelle au moins une partie (11) pouvant être déplacée de l'actionneur (10) peut être déplacée dans des positions différentes, et que ladite unité d'entraînement est formée par au moins un moteur électrique (20) ou comprend au moins un moteur électrique (20),
**caractérisé en ce**
**que** sont prévus deux éléments d'arrêt (100, 110), qui bloquent la partie (11) pouvant être déplacée de l'actionneur (10) dans deux de ses positions extrêmes de telle manière qu'ainsi également le train de roulement pouvant être relié à la partie (11) pouvant être déplacée de l'actionneur (10) est arrêté.

2. Actionneur selon la revendication 1, **caractérisé en ce que** le moteur électrique (20) est relié indirectement ou directement par l'intermédiaire d'au moins une transmission (30) à une unité, qui convertit un mouvement de rotation du moteur électrique (20) ou de la transmission (30) en un mouvement par translation de la partie (11) pouvant être déplacée de l'actionneur (10).

3. Actionneur selon la revendication 2, **caractérisé en ce que** ladite unité est formée par un mécanisme de filetage à billes (50), dans lequel il est prévu de préférence que la broche (52) du mécanisme de filetage à billes (50) soit reliée ou puisse être reliée à la transmission (30), et que l'écrou (54) du mécanisme de filetage à billes (50) soit relié ou puisse être relié à la partie (11) pouvant être déplacée de l'actionneur (10).

4. Actionneur selon l'une quelconque des revendications précédentes, **caractérisé en ce que** sont prévus des moyens, par lesquels les éléments d'arrêt (100, 110) peuvent être déverrouillés de manière active, et/ou que les éléments d'arrêt (100, 110) sont réalisés de telle manière qu'ils prennent, une fois une ou deux positions extrêmes de la partie (11) pouvant être déplacée de l'actionneur (10) atteintes, de manière autonome leur position de verrouillage.

5. Actionneur selon l'une quelconque des revendications précédentes, **caractérisé en ce que** la partie (11) pouvant être déplacée de l'actionneur (10) est formée par une partie de type boîtier ou comprend une partie de ce type, dans laquelle un ou plusieurs évidements (13, 14) sont disposés, avec lesquels les éléments d'arrêt (100, 110) viennent en prise dans la position de verrouillage.

6. Actionneur selon l'une quelconque des revendications précédentes, **caractérisé en ce que** sont prévus des moyens, par lesquels le moteur électrique (20) ou la transmission (30) peut être découplé ou découplée de ladite unité, qui transforme un mouvement de rotation du moteur électrique (20) ou de la transmission (30), dans lequel il est prévu de préférence que l'actionneur (10) soit réalisé de telle manière qu'il est déplacé de manière autonome depuis une première position, dans laquelle le train de roulement est rentré, dans une deuxième position, dans laquelle le train de roulement est sorti, quand un découplage a lieu par lesdits moyens.

7. Actionneur selon l'une quelconque des revendications précédentes, **caractérisé en ce qu'**est prévu au moins un frein, qui est réalisé de telle manière qu'il exerce lors dudit mouvement autonome de l'actionneur (10) depuis la première dans la deuxième position sur la partie (11) pouvant être déplacée de l'actionneur (10) une action de freinage, dans lequel il est prévu de préférence que le frein est relié de manière permanente à la broche (52) du mécanisme de filetage à billes (50) ou vient en prise avec celle-ci à partir de l'augmentation de la vitesse de rotation de la broche (52) ou au fur et à mesure que la vitesse de rotation de la broche augmente et déploie ainsi une action de freinage.

8. Dispositif comprenant un train de roulement pour un aéronef et un actionneur (10), dans lequel le train de roulement est relié à l'actionneur (10) de telle manière qu'il peut être rentré et/ou sorti lors de l'actionnement de l'actionneur (10), **caractérisé en ce que** l'actionneur (10) est un actionneur (10) selon l'une quelconque des revendications 1 à 7.

9. Aéronef avec au moins un dispositif, **caractérisé en ce que** le dispositif est un dispositif selon la revendication 8.
